(19) Europäisches Patentamt
European Patent Office
Office européen des brevets

(11) Veröffentlichungsnummer **0 043 802**
**B1**

(12) # EUROPÄISCHE PATENTSCHRIFT

(45) Veröffentlichungstag der Patentschrift: **22.02.84**

(21) Anmeldenummer: **81810270.9**

(22) Anmeldetag **03.07.81**

(51) Int. Cl.³ **A 01 N 47/36,** A 01 N 47/30, A 01 N 43/40 // (A01N47/36, 43/40),(A01N47/30. 43/40),(A01N43/40, 37/40, 35/10)

(54) **Synergistisches Mittel und Verfahren zur selektiven Unkrautbekämpfung, insbesondere in Getreide.**

(30) Priorität 09.07.80 CH 5253/80

(43) Veröffentlichungstag der Anmeldung: **13.01.82 Patentblatt 82/2**

(45) Bekanntmachung des Hinweises auf die Patenterteilung: **22.02.84 Patentblatt 84/8**

(84) Benannte Vertragsstaaten: **AT BE CH DE FR GB IT LI NL**

(56) Entgegenhaltungen: **EP - A - 0 004 414**

(73) Patentinhaber: **CIBA-GEIGY AG, Patentabteilung Postfach, CH-4002 Basel (CH)**

(72) Erfinder: **Quadranti, Marco, Dr., Promenade 24, CH-5200 Brugg (CH)**
Erfinder: **Maag, Kurt, Krebsenbachweg 18, CH-4148 Pfeffingen (CH)**

**EP 0 043 802 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Synergistisches Mittel und Verfahren zur selektiven Unkrautbekämpfung, insbesondere in Getreide

Die vorliegende Erfindung betrifft ein synergistisches Mittel, welches eine herbizide Wirkstoffkombination enthält, die sich hervorragend eignet zur selektiven Unkrautbekämpfung in Getreidekulturen. Die Erfindung betrifft auch ein Verfahren zur Bekämpfung von Unkräutern, insbesondere in Getreide, und die Verwendung des neuen Mittels.

Die zur Zeit häufigsten und wichtigsten Unkräuter in Getreide sind Spezies der Gattung Sinapis (Senf), Chrysanthemum (Wucherblume) und gewisse Avena-Arten (Wildhafer).

Als hervorragende postemergente Selektivherbizide gegen monokotyle Unkräuter haben sich 4-(3',5'-Dichlorpyridyl-2'-oxy)-$\alpha$-phenoxypropionsäurepropargylester der Formel I

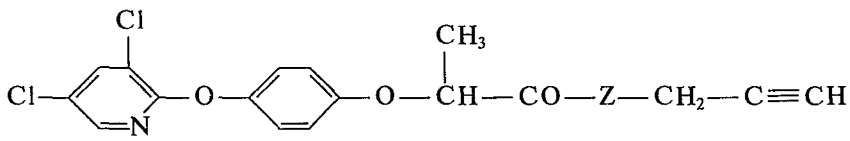

(I)

worin Z Sauerstoff oder Schwefel bedeutet, erwiesen.

Die beiden Verbindungen der Formel I, nämlich 4-(3',5'-Dichlorpyridyl-2'-oxy)-$\alpha$-phenoxy-propionsäurepropargylester (Ia) und 4-(3',5'-Dichlorpyridyl-2'-oxy)-$\alpha$-phenoxypropionthiolsäure-propargylester (Ib) ihre Herstellung und Verwendung als Selektivherbizide sind in der Europäischen Patentpublikation No. 3114 beschrieben.

Bekanntlich können dikotyle Unkräuter in Getreide aber auch einige monokotyledone Unkräuter bei postemergenter Anwendung oft erfolgreich mit 3-(3'-Chlor-4'-methylphenyl)-1,1-dimethylharnstoff (Chlortoluron) der Formel IIa

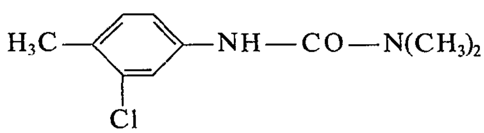

(IIa)

oder mit 3-(3'-Chlor-4'-methoxyphenyl)-1,1-dimethylharnstoff (Metoxuron) der Formel IIb

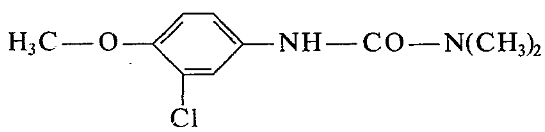

(IIb)

oder mit 3-(4'-Isopropylphenyl)-1,1-dimethylharnstoff (Isoproturon) der Formel IIc

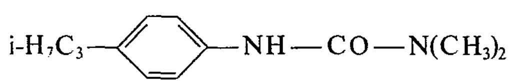

(IIc)

oder mit 1-Benzothiazol-2-yl-1,3-dimethylharnstoff (Methabenzthiazuron) der Formel IId

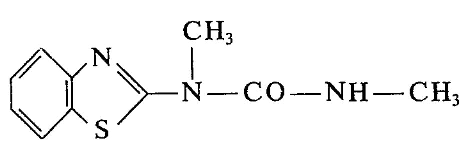

(IId)

oder mit 4-Hydroxy-3,5-dijodbenzonitril (Joxynil) der Formel IIe

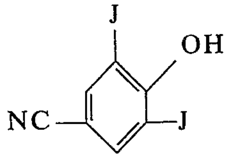

(IIe)

oder mit 3,5-Dibrom-4-hydroxybenzaldehyd-O-(2',4'-dinitrophenyl)-oxim (Bromophenoxim) der Formel IIf

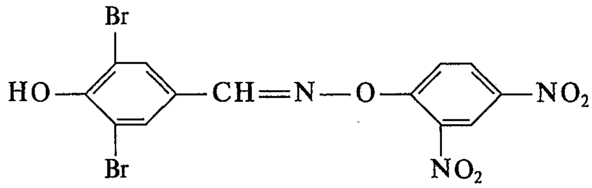

(IIf)

bekämpft werden.

Die Verbindungen der Formeln II und ihre herbizide Wirksamkeit wurden beispielsweise in folgenden Literaturstellen beschrieben:

Chlortoluron (Verb. IIa) in C.r. 5^e Conf. Com. franc.: Mauvaises Herbes (COLUMA), 1969, II, 349,
Metoxuron (Verb. IIb) in Z. Pflkrankh.,
PflPath., PflSchutz, 1968, 75, 233,
Isoproturon (Verb. IIc) in der deutschen Offenlegungsschrift 2 107 774,
Methabenzthiazuron (Verb. IId) in PflSchutz-Nachr. Bayer, 1969, 22, 314,
Joxynil (Verb. IIe) in Nature, Lond., 1963, 200, 28 und
Bromofenoxim (Verb. IIf) in Proc. 3rd EWRC Symp. »New Herbicides«, Paris 1969, S. 177.

In der EP-A-4414 sind Gemische von herbiziden Pyridyloxyphenoxypropionsäurederivaten mit verschiedenen anderen bekannten Herbiziden beschrieben. Die offenbarten Herbizidgemische haben generell ein breiteres Wirkungsspektrum als die Einzelkomponenten, wobei sich die Herbizidwirkungen additiv ergänzen. Insbesondere werden jeweils Wirkungslücken ausgefüllt. Solche Kombinationen sind in der Agrartechnik üblich und zeigen im allgemeinen keine unerwarteten Wirkungsweisen.

Es hat sich nun überraschenderweise gezeigt, daß eine mengenmäßig in bestimmten Grenzen variable Kombination der beiden Wirkstoffklassen I und II eine synergistische Wirkung entfaltet, die die Mehrzahl aller wichtigen Getreideunkräuter zu bekämpfen vermag, ohne die Getreidekultur zu schädigen. Es werden die Hauptunkräuter der Getreidekulturen, wie Arten der Dikotyledonengattung Chrysanthemum und Sinapis sowie gewisse Avena-Arten (Wildhafer) selektiv in den aufgelaufenen Kulturen vernichtet.

Es ist überraschend, daß die Kombination eines Wirkstoffes der Formel I mit einem Wirkstoff der Formeln II nicht nur eine prinzipiell zu erwartende additive Ergänzung des Wirkungsspektrums auf die üblichen mit Getreide vergesellschafteten Unkräuter hervorruft, sondern daß sie einen synergistischen Effekt erzielt, der die Wirkungsgrenzen beider Präparate unter zwei Aspekten erweitert.

Einmal werden die Aufwandmengen der Einzelverbindungen I und II bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Getreide zur Folge, wie sie für unbeabsichtigte Wirkstoffüberdosierung notwendig und erwünscht ist.

Das erfindungsgemäße Mittel kann außer in Getreidekulturen wie Gerste, Roggen und insbesondere Weizen auch zur selektiven Unkrautbekämpfung in anderen monokotylen Kulturen ähnlicher Wirkstoffempfindlichkeit mit ähnlichem Unkrautbestand eingesetzt werden, wie z. B. Mais und Reis.

Die erfindungsgemäße Wirkstoffkombination enthält einen Wirkstoff der Formel (I) und einen der Formeln (II) in beliebigem Mischungsverhältnis, in der Regel mit einem Überschuß der einen über die andere Komponente. Besonders bevorzugt sind Überschüsse der Komponente II bis 1 : 25, insbesondere aber das Mischungsverhältnis (I) : (II) = 1 : 1 bis 1 : 10.

Die erfindungsgemäßen Wirkstoffkombinationen zeigen eine ausgezeichnete Wirkung gegen Unkräuter, ohne aber Getreidekulturen in üblichen Aufwandmengen von 0,2 bis 4 kg, vorzugsweise 0,5 bis 3 kg pro Hektar nennenswert zu beeinflussen.

Als ganz besonders wirksame synergistische Wirkstoffgemische haben sich folgende Kombinationen erwiesen:

a) 4-(3',5'-Dichlorpyridyl-2'-oxy)-$\alpha$-phenoxy-propionsäurepropargylester (Ia) und 3-(3'-Chlor-4'-methylphenyl)-1,1-dimethylharnstoff (IIa),
b) 4-(3',5'-Dichlorpyridyl-2'-oxy)-$\alpha$-phenoxy-thiopropionsäurepropargylester (Ib) und 3-(3'-Chlor-4'-methylphenyl)-1,1-dimethylharnstoff (IIa),
c) 4-(3',5'-Dichlorpyridyl-2'-oxy)-$\alpha$-phenoxy-propionsäurepropargylester (Ia) und 3-(4'-Isopropylphenyl)-1,1-dimethylharnstoff (IIc) und
d) 4-(3',5'-Dichlorpyridyl-2'-oxy)-$\alpha$-phenoxy-thiopropionsäurepropargylester (Ib) und 3-(4'-Isopropylphenyl)-1,1-dimethylharnstoff (IIc).

Vorliegende Erfindung betrifft auch die Verwendung des erfindungsgemäßen Mittels, also ein Verfahren zur selektiven Ungras- und Unkrautbekämpfung in Getreide unter postemergenter Anwendung des Mittels.

Das erfindungsgemäße Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z. B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z. B. Emulsionskonzentrate, direkt versprühbare oder verdünnbare Lösungen, verdünnte Emulsionen, Spritzpulver, lösliche Pulver, Stäubemittel, Granulate, auch Verkapselungen in z. B. polymeren Stoffen. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen, d. h. die das erfindungsgemäße Wirkstoffgemisch und gegebenenfalls einen festen oder flüssigen Zusatzstoff enthaltenden Mittel, Zubereitungen oder Zusammensetzungen, werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, starke polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z. B für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$—$C_{22}$), wie z. B. die Na- oder K-Salze der Öl- oder Stearinsäure, oder von natürlichen Fettsäuregemischen, die z. B. aus Kokosnuß- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z. B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkyrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol, Äthylendiaminpolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

»Mc Cutcheon's Detergens and Emulsifiers Annual« MC Publishing Corp., Ringwood, New Jersey, 1979,
Sisely and Wood, »Encyclopedia of Surface Active Agents«,
Chemical Publishin Co., Inc. New York, 1964.

Der Wirkstoffgehalt in handelsfähigen Mitteln liegt zwischen 0,1 und 95 Gewichtsprozent, vorzugsweise 1 und 80 Gewichtsprozent.

Insbesondere setzen sich bevorzugte Formulierungen folgendermaßen zusammen (%= Gewichtsprozent):

Lösungen

| | |
|---|---|
| Aktiver Wirkstoff: | 5 bis 95%, vorzugsweise 10 bis 80% |
| Lösungsmittel: | 95 bis 5%, vorzugsweise 90 bis 0% |
| oberflächenaktives Mittel: | 1 bis 30%, vorzugsweise 2 bis 20% |

Emulgierbare Konzentrate

| | |
|---|---|
| Aktiver Wirkstoff: | 10 bis 50%, bevorzugt 10 bis 40% |
| oberflächenaktives Mittel: | 5 bis 40%, bevorzugt 10 bis 20% |
| flüssiges Trägermittel: | 20 bis 95%, vorzugsweise 40 bis 80% |

Stäube

| | |
|---|---|
| Aktiver Wirkstoff: | 0,5 bis 10%, vorzugsweise 2 bis 8% |
| festes Trägermittel: | 99,5 bis 90%, vorzugsweise 98 bis 92% |

Suspensions-Konzentrate

| | |
|---|---|
| Aktiver Wirkstoff: | 5 bis 75%, vorzugsweise 10 bis 50% |
| Wasser: | 94 bis 25%, vorzugsweise 90 bis 30% |
| oberflächenaktives Mittel: | 1 bis 40%, vorzugsweise 2 bis 30% |

Benetzbare Pulver

| | |
|---|---|
| Aktiver Wirkstoff: | 5 bis 90%, vorzugsweise 10 bis 80% und insbesondere 20 bis 60% |
| oberflächenaktives Mittel: | 0,5 bis 20%, vorzugsweise 1 bis 15% |
| festes Trägermittel: | 5 bis 90%, vorzugsweise 30 bis 70% |

Granulate

| | |
|---|---|
| aktiver Wirkstoff: | 0,5 bis 30%, vorzugsweise 3 bis 15% |
| festes Trägermittel: | 99,5 bis 70%, vorzugsweise 97 bis 85% |

Während als Handelsware eher konzentrierte Mittel bevorzugt werden, verwendet der Endverbraucher in der Regel verdünnte Mittel. Die Anwendungsformen können bis hinab zu 0,001%an Wirkstoff verdünnt werden.

Den beschriebenen erfindungsgemäßen Mitteln lassen sich andere biozide Wirkstoffe oder Mittel beimischen. So können die neuen Mittel außer den genannten Verbindungen der allgemeinen Formel I und der Formel II z. B. Insektizide, Fungizide, Bakterizide, Fungistatika, Bakteriostatika oder Nematizide zur Verbreiterung des Wirkungsspektrums enthalten.

Ein synergistischer Effekt liegt bei Herbiziden immer dann vor, wenn die herbizide Wirkung der Wirkstoffkombination I + II größer ist als die Summe aus der Wirkung der einzeln applizierten Wirkstoffe.

Das zu erwartende Pflanzenwachstum E für eine gegebene Kombination zweier Herbizide kann (vgl. COLBY, S. R., »Calculating synergistic and antagonistic response of herbicide combinations«, Weeds 15, Seiten 20—22, 1967) wie folgt berechnet werden:

$$E = \frac{X \cdot Y}{100}$$

Dabei bedeuten:

X = Prozent Wachstum (im Vergleich zu unbehandelten Pflanzen) bei Behandlung mit einem Herbizid I mit p kg Aufwandmenge pro Hektar,
Y = Prozent Wachstum bei Behandlung mit einem Herbizid II mit q kg Aufwandmenge pro Hektar,
E = erwartetes Wachstum in Prozent zu den Kontrollpflanzen nach Behandlung mit Herbizidgemisch I + II bei einer Aufwandmenge von p + q kg Wirkstoffmenge pro Hektar.

Ist der tatsächlich beobachtete Wert niedriger als der zu erwartende Wert E, so liegt Synergismus vor.

Der synergistische Effekt der Kombinationen der Wirkstoffe I und II wird in den folgenden Beispielen demonstriert.

## Beispiel 1

Die Testpflanzen werden in Plastikcontainern, die 30 l sterilisierte Gartenerde enthalten, im Gewächshaus ausgesät. Nach dem Auflaufen werden die Pflanzen im 2- bis 3-Blattstadium mit einer wässerigen Dispersion der Wirkstoffkombination besprüht. Die Aufwandmenge an Dispersion beträgt 50 ml pro $m^2$. Nach 15 Tagen bei Temperaturen von 10—20° C, einer relativen Luftfeuchtigkeit von 60—70% und täglicher Bewässerung der Container erfolgt die Auswertung.

Der Schädigungsgrad der Pflanzen wird linear nach folgendem Maßstab bewertet:

1: Pflanzen abgestorben
5: mittlere Wirkung
9: Normalzustand.

Für verschiedene Mischungsverhältnisse und Gesamtwirkstoffmengen werden folgende Ergebnisse erzielt:

a) Tabelle 1

Toleranz und Aktivität von 4-(3',5'-Dichlorpyridyl-2'-oxy)-α-phenoxy-propionsäurepropargylester (Verb. Ia) und den Verbindungen II a bis II f und deren Mischungen bei postemergenter Anwendung.

Testpflanze: Weizen ›Colibri‹

| Verb. Ia kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 9 | 9 | 6 | 7 | 7 | 7 | 7 | 8 |
| Verb. II b | 9 | 9 | 6 | 6 | 9 | 7 | 9 | 9 |
| Verb. II c | 9 | 9 | 6 | 6 | 6 | 7 | 9 | 9 |
| Verb. II d | 9 | 9 | 6 | 7 | 7 | 7 | 9 | 9 |
| Verb. II e | 9 | 9 | 6 | 8 | 8 | 7 | 9 | 9 |
| Verb. II f | 9 | 9 | 6 | 9 | 9 | 7 | 9 | 9 |

Testpflanze: Avena fatua

| Verb. Ia kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 9 | 9 | 2 | 2 | 2 | 2 | 2 | 2 |
| Verb. II b | 9 | 9 | 2 | 2 | 2 | 2 | 2 | 2 |
| Verb. II c | 7 | 9 | 2 | 2 | 2 | 2 | 2 | 2 |
| Verb. II d | 9 | 9 | 2 | 2 | 2 | 2 | 2 | 2 |
| Verb. II e | 9 | 9 | 2 | 2 | 2 | 2 | 2 | 2 |
| Verb. II f | 9 | 9 | 2 | 2 | 2 | 2 | 2 | 2 |

Testpflanze: Sinapis arvensis

| Verb. Ia kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 3 | 6 | 9 | 2 | 3 | 9 | 2 | 3 |
| Verb. II b | 2 | 3 | 9 | 2 | 3 | 9 | 1 | 2 |
| Verb. II c | 1 | 1 | 9 | 1 | 1 | 9 | 1 | 1 |
| Verb. II d | 2 | 3 | 9 | 1 | 2 | 9 | 1 | 2 |
| Verb. II e | 1 | 2 | 9 | 1 | 2 | 9 | 1 | 2 |
| Verb. II f | 2 | 3 | 9 | 1 | 1 | 9 | 1 | 2 |

Testpflanze: Chrysanthemum segetum

| Verb. Ia kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 6 | 6 | 9 | 3 | 4 | 9 | 4 | 6 |
| Verb. II b | 2 | 6 | 9 | 2 | 2 | 9 | 2 | 3 |
| Verb. II c | 4 | 5 | 9 | 2 | 3 | 9 | 2 | 3 |
| Verb. II d | 9 | 9 | 9 | 4 | 4 | 9 | 3 | 4 |
| Verb. II e | 2 | 4 | 9 | 2 | 3 | 9 | 1 | 3 |
| Verb. II f | 1 | 3 | 9 | 1 | 3 | 9 | 1 | 3 |

Werden die nach der Methode von Colby für additive Wirkung berechneten Werte mit den Resultaten aus Tabelle 1 verglichen, so erkennt man, daß die beobachteten Wachstumswerte bei Sinapis arvensis und Chrysanthemum segetum kleiner sind, als die errechneten Wirkungen. Damit ist der synergistische Effekt der Mischung von 4-(3',5'-Dichlorpyridyl-2'-oxy)-α-phenoxypropionsäurepropargylester mit den Verbindungen II a bis II f bewiesen (vgl. Tabelle 2).

Tabelle 2

Nach Methode Colby errechnete Werte zum Nachweis des Synergismus zwischen 4-(3',5'-Dichlorpyridyl-2'-oxy)-α-phenoxypropionsäurepropargylester (Verb. I a) und den Verbindungen II a bis II f

Testpflanze: Weizen ›Colibri‹

| Verb. I a kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 75 | 62 | 75 | 62 | 75 | 75 | 87 | 75 |
| Verb. II b | 62 | 62 | 100 | 62 | 100 | 75 | 100 | 75 |
| Verb. II c | 62 | 62 | 62 | 62 | 100 | 75 | 100 | 75 |
| Verb. II d | 75 | 62 | 75 | 62 | 100 | 75 | 100 | 75 |
| Verb. II e | 87 | 62 | 87 | 62 | 100 | 75 | 100 | 75 |
| Verb. II f | 100 | 62 | 100 | 62 | 100 | 75 | 100 | 75 |

Testpflanze: Avena fatua

| Verb. I a kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 12 | 12 | 12 | 12 | 12 | 12 | 12 | 12 |
| Verb. II b | 12 | 12 | 12 | 12 | 12 | 12 | 12 | 12 |
| Verb. II c | 12 | 9 | 12 | 12 | 12 | 9 | 12 | 12 |
| Verb. II d | 12 | 12 | 12 | 12 | 12 | 12 | 12 | 12 |
| Verb. II e | 12 | 12 | 12 | 12 | 12 | 12 | 12 | 12 |
| Verb. II f | 12 | 12 | 12 | 12 | 12 | 12 | 12 | 12 |

Testpflanze: Sinapis arvensis

| Verb. I a kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 12 | 25 | 25 | 62 | 12 | 25 | 25 | 62 |
| Verb. II b | 12 | 12 | 25 | 25 | 1 | 12 | 12 | 25 |
| Verb. II c | 1 | 1 | 1 | 1 | 1 | 1 | 1 | 1 |
| Verb. II d | 1 | 12 | 12 | 25 | 1 | 12 | 12 | 25 |
| Verb. II e | 1 | 1 | 12 | 12 | 1 | 1 | 12 | 12 |
| Verb. II f | 1 | 12 | 12 | 25 | 1 | 12 | 12 | 25 |

Testpflanze: Chrysanthemum segetum

| Verb. I a kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 25 | 62 | 37 | 62 | 37 | 62 | 62 | 62 |
| Verb. II b | 12 | 12 | 12 | 62 | 12 | 12 | 25 | 62 |
| Verb. II c | 12 | 37 | 25 | 50 | 12 | 37 | 25 | 50 |
| Verb. II d | 37 | 100 | 37 | 100 | 25 | 100 | 37 | 100 |
| Verb. II e | 12 | 12 | 37 | 37 | 1 | 12 | 25 | 37 |
| Verb. II f | 1 | 1 | 25 | 25 | 1 | 1 | 25 | 25 |

b) Tabelle 3

Toleranz und Aktivität von 4-(3',5'-Dichlorpyridyl-2'-oxy)-$\alpha$-phenoxy-propionthiolsäurepropargylester (Verb. I b) und den Verbindungen II a bis II f und deren Mischungen bei postemergenter Anwendung.

Testpflanze: Weizen ›Colibri‹

| Verb. I b kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 9 | 9 | 7 | 7 | 7 | 7 | 9 | 9 |
| Verb. II b | 9 | 9 | 7 | 9 | 9 | 7 | 9 | 9 |
| Verb. II c | 9 | 9 | 7 | 8 | 8 | 7 | 9 | 9 |
| Verb. II d | 9 | 9 | 7 | 9 | 9 | 7 | 8 | 8 |
| Verb. II e | 9 | 9 | 7 | 9 | 9 | 7 | 9 | 9 |
| Verb. II f | 9 | 9 | 7 | 9 | 9 | 7 | 9 | 9 |

Testpflanze: Avena fatua

| Verb. I b kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 9 | 9 | 2 | 2 | 2 | 2 | 2 | 2 |
| Verb. II b | 9 | 9 | 2 | 2 | 2 | 2 | 2 | 2 |
| Verb. II c | 7 | 9 | 2 | 2 | 2 | 2 | 2 | 2 |
| Verb. II d | 9 | 9 | 2 | 2 | 2 | 2 | 2 | 2 |
| Verb. II e | 9 | 9 | 2 | 2 | 2 | 2 | 2 | 2 |
| Verb. II f | 9 | 9 | 2 | 2 | 2 | 2 | 2 | 2 |

Testpflanze: Sinapis arvensis

| Verb. I b kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 3 | 6 | 9 | 2 | 4 | 9 | 2 | 3 |
| Verb. II b | 2 | 3 | 9 | 2 | 3 | 9 | 3 | 3 |
| Verb. II c | 1 | 1 | 9 | 1 | 1 | 9 | 1 | 1 |
| Verb. II d | 2 | 3 | 9 | 1 | 2 | 9 | 1 | 2 |
| Verb. II e | 1 | 2 | 9 | 1 | 2 | 9 | 1 | 1 |
| Verb. II f | 2 | 3 | 9 | 2 | 2 | 9 | – | – |

Testpflanze: Chrysanthemum segetum

| Verb. I b kg AS/ha | 0 | | 0,5 | | | 0,25 | | |
|---|---|---|---|---|---|---|---|---|
| Mischpartner kg AS/ha | 1,0 | 0,5 | 0 | 1,0 | 0,5 | 0 | 1,0 | 0,5 |
| Verb. II a | 6 | 6 | 9 | 2 | 4 | 9 | 4 | 4 |
| Verb. II b | 2 | 6 | 9 | 2 | 3 | 9 | 1 | 2 |
| Verb. II c | 4 | 5 | 9 | 2 | 2 | 9 | 3 | 3 |
| Verb. II d | 9 | 9 | 9 | 6 | 6 | 9 | 6 | 9 |
| Verb. II e | 2 | 4 | 9 | 2 | 2 | 9 | 2 | 3 |
| Verb. II f | 1 | 3 | 9 | 1 | 3 | 9 | 1 | 3 |

Werden die nach Colby für additive Wirkung berechneten Werte mit den Resultaten aus Tabelle 3 verglichen, so erkennt man, daß die Wachstumswerte bei Sinapis arvensis und Chrysanthemum segetum kleiner sind, als die errechneten Wirkungen. Damit ist der synergistische Effekt der Mischung von 4-(3',5'-Dichlorpyridyl-2'-oxy)-$\alpha$-phenoxypropionthiolsäurepropargylester (Verb. I b mit den Verbindungen II a bis II f bewiesen (vgl. Tabelle 4).

Tabelle 4

Nach Methode Colby errechnete Werte zum Nachweis des Synergismus zwischen 4-(3',5'-Dichlorpyridyl-2'-oxy)-$\alpha$-phenoxy-propionsäure-propargylester (Verb. I b) und den Verbindungen II a bis II f

Testpflanze: Weizen ›Colibri‹

| Verb. I b kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 75 | 75 | 75 | 75 | 100 | 75 | 100 | 75 |
| Verb. II b | 100 | 75 | 100 | 75 | 100 | 75 | 100 | 75 |
| Verb. II c | 87 | 75 | 87 | 75 | 100 | 75 | 100 | 75 |
| Verb. II d | 100 | 75 | 100 | 75 | 87 | 75 | 87 | 75 |
| Verb. II e | 100 | 75 | 100 | 75 | 100 | 75 | 100 | 75 |
| Verb. II f | 100 | 75 | 100 | 75 | 100 | 75 | 100 | 75 |

Testpflanze: Avena fatua

| Verb. I b kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 12 | 12 | 12 | 12 | 12 | 12 | 12 | 12 |
| Verb. II b | 12 | 12 | 12 | 12 | 12 | 12 | 12 | 12 |
| Verb. II c | 12 | 9 | 12 | 12 | 12 | 9 | 12 | 12 |
| Verb. II d | 12 | 12 | 12 | 12 | 12 | 12 | 12 | 12 |
| Verb. II e | 12 | 12 | 12 | 12 | 12 | 12 | 12 | 12 |
| Verb. II f | 12 | 12 | 12 | 12 | 12 | 12 | 12 | 12 |

Testpflanze: Sinapis arvensis

| Verb. I b kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 12 | 25 | 37 | 62 | 12 | 25 | 25 | 62 |
| Verb. II b | 12 | 12 | 25 | 25 | 25 | 12 | 25 | 25 |
| Verb. II c | 1 | 1 | 1 | 1 | 1 | 1 | 1 | 1 |
| Verb. II d | 1 | 12 | 12 | 25 | 1 | 12 | 12 | 75 |
| Verb. II e | 1 | 1 | 12 | 12 | 1 | 1 | 1 | 12 |
| Verb. II f | 12 | 12 | 12 | 25 | — | — | — | — |

Testpflanze: Chrysanthemum segetum

| Verb. I b kg AS/ha | 0,5 | | | | 0,25 | | | |
|---|---|---|---|---|---|---|---|---|
| Mischpartner kg AS/ha | 1,0 | | 0,5 | | 1,0 | | 0,5 | |
| | gemessener Wert | erwarteter Wert | gemessener Wert | erwarteter Wert | gemessener Wert | erwarteter Wert | gemessener Wert | erwarteter Wert |
| Verb. II a | 12 | 62 | 37 | 62 | 37 | 62 | 37 | 62 |
| Verb. II b | 12 | 12 | 25 | 62 | 1 | 12 | 12 | 62 |
| Verb. II c | 12 | 37 | 12 | 50 | 25 | 37 | 25 | 50 |
| Verb. II d | 62 | 100 | 62 | 100 | 62 | 100 | 100 | 100 |
| Verb. II e | 12 | 12 | 12 | 37 | 12 | 12 | 25 | 37 |
| Verb. II f | 1 | 1 | 25 | 25 | 1 | 1 | 25 | 25 |

Beispiel 2

In Freilandversuchen auf Weizenfeldern wurden die folgenden Ergebnisse erzielt. Die Angabe des Wachstums erfolgt in Prozent im Vergleich zum unbehandelten Kontrollfeld:

a) Feldversuch in Cisse/Frankreich.
Applikation am 18. März 1980.
Auswertung 85 Tage nach Applikation (10. Juni 1980).

| Verbindung Nr. | Wachstum AVENA FATUA | | Wachstum |
|---|---|---|---|
| Aufwandmenge g/ha | beobachtet | erwartet nach COLBY | WEIZEN |
| Ia: 150 | 50 | – | 100 |
| Ib: 200 | 55 | – | 100 |
| IIa: 2000 | 60 | – | 100 |
| IIc: 1250 | 90 | – | 100 |
| Ia + IIa: (150 + 2000) | 12 | 30 | 100 |
| Ia + IIc: (150 + 1250) | 6 | 45 | 100 |
| Ib + IIa: (200 + 2000) | 12 | 33 | 100 |
| Ib + IIc: (200 + 1250) | 5 | 50 | 100 |

a) Feldversuch in Pouant/Frankreich.
Applikation am 19. März 1980.
Auswertung 84 Tage nach Applikation (10. Juni 1980).

| Verbindung Nr. | Wachstum AVENA FATUA | | Wachstum |
|---|---|---|---|
| Aufwandmenge g/ha | beobachtet | erwartet nach COLBY | WEIZEN |
| Ia: 150 | 15 | – | 100 |
| Ib: 200 | 20 | – | 100 |
| IIa: 2000 | 80 | – | 100 |
| IIc: 1250 | 70 | – | 100 |
| Ia + IIa: (150 + 2000) | 2 | 12 | 100 |
| Ia + IIc: (150 + 1250) | 0 | 10,5 | 100 |
| Ib + IIa: (200 + 2000) | 3 | 16 | 100 |
| Ib + IIc: (200 + 1250) | 2 | 12 | 100 |

Formulierungsbeispiele

Beispiel 3:

Formulierungsbeispiele für synergistische Wirkstoffgemische der Formeln I und II
(% = Gewichtsprozent)

a) Spritzpulver

| | a) | b) | c) | d) |
|---|---|---|---|---|
| Wirkstoff I a oder I b | 10% | 20% | 5% | 30% |
| einer der Wirkstoffe II | 10% | 40% | 15% | 30% |
| Na-Ligninsulfonat | 5% | 5% | 5% | 5% |
| Na-Laurylsulfat | 3% | – | 3% | – |
| Na-Diisobutylnaphthalinsulfonat | – | 6% | – | 6% |
| Octylphenolpolyäthylenglykoläther (7–8 Mol AeO) | – | 2% | – | 2% |
| Hochdisperse Kieselsäure | 5% | 27% | 5% | 27% |
| Kaolin | 67% | – | 67% | – |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) | c) |
|---|---|---|---|
| Wirkstoff I a oder I b | 5% | 5% | 12% |
| einer der Wirkstoffe II | 5% | 20% | 13% |
| Octylphenolpolyäthylenglykoläther (4–5 Mol AeO) | 3% | 3% | 3% |
| Ca-Dodecylbenzolsulfonat | 3% | 3% | 2% |
| Ricinusölpolyglykoläther (36 Mol AeO) | 4% | 4% | 4% |
| Cyclohexanon | 30% | 30% | 31% |
| Xylolgemisch | 50% | 35% | 35% |

Aus diesen Konzentraten können durch Verdünnen mit Wasser Emulsionen jeden gewünschten Konzentration hergestellt werden.

c) Stäubemittel

| | a) | b) | c) | d) |
|---|---|---|---|---|
| Wirkstoff I a oder I b | 2 % | 4 % | 2 % | 4 % |
| einer der Wirkstoffe II | 3 % | 4 % | 4 % | 8 % |
| Talkum | 95 % | – | 94 % | – |
| Kaolin | – | 92 % | – | 88 % |

Man erhält anwendungsfertige Stäubemittel, indem das Wirkstoffgemisch mit dem Träger vemischt und auf einer geeigneten Mühle vermahlen wird.

d) Extruder Granulat

| | a) | b) | c) |
|---|---|---|---|
| Wirkstoff I a oder I b | 5 % | 3 % | 5 % |
| einer der Wirkstoffe II | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschließend im Luftstrom getrocknet.

e) Umhüllungs-Granulat

| | a) | b) |
|---|---|---|
| Wirkstoff I a oder I b | 1,5 % | 3 % |
| einer der Wirkstoffe II | 1,5 % | 5 % |
| Polyäthylenglykol (MG 200) | 3 % | 3 % |
| Kaolin | 94 % | 89 % |

Das fein gemahlenene Wirkstoffgemisch wird in einem Mischer auf das Polyäthylenglykol angefeuchtete Kaolin gleichmäßig aufgetragen. Aus diese Weise erhält man staubfreie Umhüllungs-Granulate.

f) Suspensions-Konzentrat

| | a) | b) |
|---|---|---|
| Wirkstoff I a oder I b | 20% | 20% |
| einer der Wirkstoffe II | 20% | 40% |
| Aethylenglykol | 10% | 10% |
| Nonylphenolpolyäthylenglykoläther (15 Mol AeO) | 6% | 6% |
| Na-Ligninsulfonat | 10% | 10% |
| Carboxymethylcellulose | 1% | 1% |
| 37%ige wäßrige Formaldehyd-Lösung | 0,2% | 0,2% |
| Silikonöl in Form einer 75%igen wäßrigen Emulsion | 0,8% | 0,8% |
| Wasser | 32% | 12% |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

**Patenansprüche**

1. Synergistisches Mittel zur selektiven Unkrautbekämpfung, dadurch gekennzeichnet, daß es neben Träger- und/oder anderen Zuschlagstoffen als wirksame Komponente einerseits einen 4-(3',5'-Dichlorpyridyl-2'-oxy)-$\alpha$-phenoxy-propionsäurepropargylester der Formel I

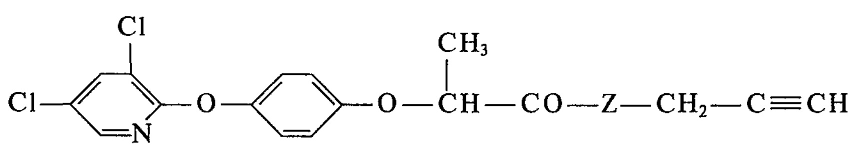
(I)

worin Z Sauerstoff oder Schwefel bedeutet, und andererseits 3-(3'-Chlor-4'-methylphenyl)-1,1-dimethylharnstoff (IIa) oder 3-(3'-Chlor-4'-methoxyphenyl)-1,1-dimethylharnstoff (IIb) oder 3-(4'-Isopropylphenyl)-1,1-dimethylharnstoff (IIc) oder 1-Benzothiazol-2-yl-1,3-dimethylharnstoff (IId) oder 4-Hydroxy-3,5-dijodbenzonitril (IIe) oder 3,5-Dibrom-4-hydroxybenzaldehyd-O-(2',4'-dinitrophenyl)-oxim (IIf) enthält.

2. Mittel gemäß Patentanspruch 1, dadurch gekennzeichnet, daß es wirksame Komponenten 4-(3',5'-Dichlorpyridyl-2'-oxy)-$\alpha$-phenoxy-propionsäurepropargylester (Ia) und 3-(3'-Chlor-4'-methylphenyl)-1,1-dimethylharnstoff (IIa) enthält.

3. Mittel gemäß Patentanspruch 1, dadurch gekennzeichnet, daß es wirksame Komponenten 4-(3',5'-Dichlorpyridyl-2'-oxy)-$\alpha$-phenoxy-thiopropionsäurepropargylester (Ib) und 3-(3'-Chlor-4'-methylphenyl)-1,1-dimethylharnstoff (IIa) enthält.

4. Mittel gemäß Patentanspruch 1, dadurch gekennzeichnet, daß es wirksame Komponenten 4-(3',5'-Dichlorpyridyl-2'-oxy)-$\alpha$-phenoxy-propionsäurepropargylester (Ia) und 3-(4'-Isopropylphenyl)-1,1-dimethylharnstoff (IIc) enthält.

5. Mittel gemäß Patentanspruch 1, dadurch gekennzeichnet, daß es wirksame Komponenten 4-(3',5'-Dichlorpyridyl-2'-oxy)-$\alpha$-phenoxy-thiopropionsäurepropargylester (Ib) und 3-(4'-Isopropylphenyl)-1,1-dimethylharnstoff (IIc) enthält.

6. Mittel gemäß einem der Patentansprüche 1 bis 5, dadurch gekennzeichnet, daß im genannten Mittel die Komponente (II) gegenüber der Komponente (I) in etwa gleichem Gewichtsverhältnis oder im Überschuß vorhanden ist.

7. Mittel gemäß Patentanspruch 6, dadurch gekennzeichnet, daß das Gewichtsverhältnis zwischen Komponente (I) und Komponente (II) 1:1 bis 1:25, vorzugsweise 1:1 bis 1:10 beträgt.

8. Verfahren zur selektiven Unkrautbekämpfung in Getreide, dadurch gekennzeichnet, daß man verunkrautete Getreidekulturen postemergent mit einer wirksamen Menge eines Mittels gemäß einem der Patentansprüche 1 bis 7 behandelt.

9. Verfahren gemäß Patentanspruch 8, dadurch gekennzeichnet, daß man Getreidekulturen, welche als Unkräuter Dikotyledonen der Gattung Chrysanthemum und Sinapis und Wildhaferarten enthalten,

mit dem genannten Mittel behandelt.

10. Verfahren gemäß Ansprüchen 8 und 9, dadurch gekennzeichnet, daß man die Getreidekultur mit dem genannten Mittel in Aufwandmengen behandelt, die 0,2 bis 4 kg, vorzugsweise 0,5 bis 3 kg Totalwirkstoffe pro Hektar entsprechen.

11. Verwendung einer wirksamen Menge eines Mittels gemäß einem der Patentansprüche 1 bis 7 zur postemergenten selektiven Unkrautbekämpfung in Getreidekulturen.

## Claims

1. A synergistic composition for selectively controlling weeds, which composition comprises, on the one hand, a 4-(3',5'-dichloropyridyl-2'-oxy)-$\alpha$-phenoxypropionic acid propargyl ester of the formula I

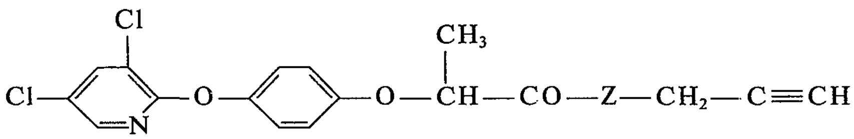

(I)

wherein Z is oxygen or sulfur, and, on the other, one of 3-(3'-chloro-4'-methylphenyl)-1,1-dimethylurea (IIa), 3-(3'-chloro-4'-methoxyphenyl)-1,1dimethylurea (IIb), 3-(4'-isopropylphenyl)-1,1-dimethylurea (IIc), 1-benzothiazol-2-yl-1,3-dimethylurea (IId), 4-hydroxy-3,5-diiodobenzonitrile (IIe) or 3,5-dibromo-4-hydroxybenzaldehyde-O-(2',4'-dinitrophenyl) oxime (IIf), together with carriers and/or other adjuvants.

2. A composition according to claim 1 which comprises 4-(3',5'-dichloropyridyl-2'-oxy)-$\alpha$-phenoxypropionic acid propargyl ester (Ia) and 3-(3'-chloro-4'-methylphenyl)-1,1-dimethylurea (IIa).

3. A composition according to claim 1 which comprises 4-(3',5'-dichloropyridyl-2'-oxy)-$\alpha$-phenoxythiopropionic acid propargyl ester (Ib) and 3-(3'-chloro-4'-methylphenyl)-1,1-dimethylurea (IIa).

4. A composition according to claim 1 which comprises 4-(3',5'-dichloropyridyl-2'-oxy)-$\alpha$-phenoxypropionic acid propargyl ester (Ia) and 3-(4'-isopropylphenyl)-1,1-dimethylurea (IIc).

5. A composition according to claim 1 which comprises 4-(3',5'-dichloropyridyl-2'-oxy)-$\alpha$-phenoxythiopropionic acid propargyl ester (Ib) and 3-(4'-isopropylphenyl)-1,1-dimethylurea (IIc).

6. A composition according to any one of claims 1 to 5, said composition containing component (II) in approximately equal weight ratio to, or in excess of, component (I).

7. A composition according to claim 6, wherein the weight ratio of component (I) to component (II) is 1 : 1 to 1 : 25, preferably 1 : 1 to 1 : 10.

8. A method of selectively controlling weeds in cereals, which method comprises treating weed-infested cereal crops postemergence with a herbicidally effective amount of a composition according to any one of claims 1 to 7.

9. A method according to claim 8, wherein the weeds to be controlled are dicot weeds of the genera Chrysanthemum and Sinapis and Avena species.

10. A method according to either of claims 8 or 9, which method comprises treating the cereals crops at rates of application corresponding to 0.2 to 4 kg, preferably 0.5 to 3 kg, of total active ingredient per hectare.

11. Use of an effective amount of a composition as claimed in any one of claims 1 to 7 for selectively controlling weeds postemergence in crops of cereals.

## Revendications

1. Produit synergétique pour combattre sélectivement les mauvaises herbes, caractérisé en ce qu'il contient, avec des véhicules et/ou d'autres additifs, en tant que composant actif d'une part un 4-(3',5'-dichloropyridiyl-2'-oxy)-$\alpha$-phénoxypropionate de propargyle de formule I

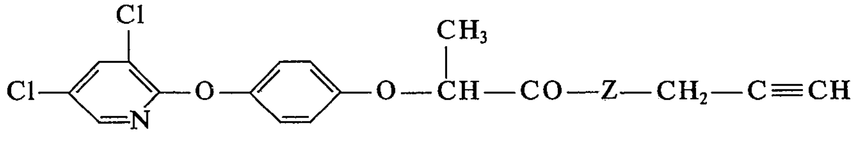

(I)

dans laquelle Z représente l'oxygène ou le soufre, et d'autre part la 3-(3'-chloro-4'-méthylphényl)-1,1-diméthylurée (IIa) ou la 3-(3'-chloro-4'-méthoxyphényl)-1,1-diméthylurée (IIb) ou la 3-(4'-isopropylphényl)-1,1-diméthylurée (IIc) ou la 1-benzothiazole-2-yl-1,3-diméthylurée (IId) ou le 4-hydroxy-3,5-diiodobenzonitrile (IIe) ou la 3,5-dibromo-4-hydroxybenzaldéhyde-O-(2',4'-dinitrophényl)-oxime (IIf).

2. Produit selon la revendication 1, caractérisé en ce qu'il contient en tant que composants actifs le

4-(3',5'-dichloropyridyl-2'-oxy)-α-phénoxypropionate de propargyle (Ia) et la 3-(3'-chloro-4'-méthylphényl)-1,1-diméthylurée (IIa).

3. Produit selon la revendication 1, caractérisé en ce qu'il contient en tant que composants actifs le 4-(3',5'-dichloropyridyl-2'-oxy)-α-phénoxythiopropionate de propargyle (Ib) et la 3-(3'-chloro-4'-méthylphényl)-1,1-diméthylurée (IIa).

4. Produit selon la revendication 1, caractérisé en ce qu'il contient en tant que composants actifs le 4-(3',5'-dichloropyridyl-2'-oxy)-α-phénoxypropionate de propargyle (Ia) et la 3-(4'-isopropylphényl)-1,1-diméthylurée (IIc).

5. Produit selon la revendication 1, caractérisé en ce qu'il contient en tant que composants actifs le 4-(3',5'-dichloropyridyl-2'-oxy)-α-phénoxythiopropionate de propargyle (Ib) et la 3-(4'-isopropylphényl)-1,1-diméthylurée (IIc).

6. Produit selon l'une des revendications 1 à 5, caractérisé en ce que, dans ce produit, le composant II est en quatité à peu près égale ou en excès par rapport au composant I.

7. Produit selon la revendication 6, caractérisé en ce que les proportions relatives en poids entre le composant I et le composant II sont de 1 : 1 à 1 : 25, de préférence de 1 : 1 à 1 : 10.

8. Procédé pour combattre sélectivement les mauvaises herbes dans les cultures de céréales, caractérisé en ce que l'on traite les cultures de céréales infestées par les mauvaises herbes en post-levée par une dose efficace d'un produit selon l'une des revendications 1 à 7.

9. Procédé selon la revendication 8, caractérisé en ce que l'on traite par le produit en question des cultures de céréales contenant en tant que mauvaises herbes des dicotylédones du genre Chrysanthemum et Sinapis et des espèces de folle avoine.

10. Procédé selon les revendications 8 et 9, caractérisé en ce que l'on traite la culture de céréales par le produit en question à des doses d'application de 0,2 à 4 kg, de préférence de 0,5 à 3 kg de substances actives totales par ha.

11. Utilisation d'une quantité efficace d'un produit selon l'une des revendications 1 à 7 pour combattre sélectivement les mauvaises herbes en post-levée dans les cultures de céréales.